(19) Europäisches Patentamt
European Patent Office
Office européen des brevets

(11) EP 2 502 731 A1

(12) EUROPEAN PATENT APPLICATION
published in accordance with Art. 153(4) EPC

(43) Date of publication:
26.09.2012 Bulletin 2012/39

(51) Int Cl.:
B29C 70/06 (2006.01)         B29C 43/46 (2006.01)
B29C 43/58 (2006.01)         B29K 105/06 (2006.01)
B29L 9/00 (2006.01)

(21) Application number: 10831572.2

(22) Date of filing: 17.11.2010

(86) International application number:
PCT/JP2010/070457

(87) International publication number:
WO 2011/062178 (26.05.2011 Gazette 2011/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 18.11.2009 JP 2009263306

(71) Applicant: Mitsubishi Heavy Industries, Ltd.
Tokyo 108-8215 (JP)

(72) Inventors:
• KAWAGUCHI Takayuki
Tokyo 108-8215 (JP)
• KAWAMURA Tetsuya
Tokyo 108-8215 (JP)

• WATANABE Suguru
Tokyo 108-8215 (JP)
• NOOKA Satoru
Tokyo 108-8215 (JP)
• ONO Hideomi
Tokyo 108-8215 (JP)
• TAKEUCHI Yukio
Tokyo 108-8215 (JP)

(74) Representative: HOFFMANN EITLE
Patent- und Rechtsanwälte
Arabellastrasse 4
81925 München (DE)

(54) INSPECTION METHOD, METHOD FOR PRODUCING COMPOSITE MATERIAL COMPONENTS, INSPECTION DEVICE, AND DEVICE FOR PRODUCING COMPOSITE MATERIAL COMPONENTS

(57) An inspection method includes photographing an image by a camera mounted on a lamination head during a first fiber-reinforced plastic tape is attached by the lamination head while the lamination head moves, and calculating a gap amount between the first fiber-reinforced plastic tape and a second fiber-reinforced plastic tape on the basis of a first component of translational displacement in an optical axis direction of the camera which is a translational displacement of the lamination head during attachment of the first fiber-reinforced plastic tape, an in-plane second component of translational displacement which is perpendicular to the optical axis direction of the translational displacement, and the image.

FIG. 3

**Description**

Technical Field

The present invention relates to a method for producing composite material components in which a fiber-reinforced plastic member is used.

The present application claims the right of priority to Japanese Patent Application No. 2009-263306 filed on November 18, 2009, in Japan, with the content cited herewith.

Background Art

Fiber-reinforced plastic members have been used as a structural member, etc., for aircraft. Patent Document 1 discloses an automatic lamination molding device which automatically carries out lamination and molding of a fiber-reinforced plastic tape by a fiber placement method.

In a recognition testing system of an object to be photographed which has been disclosed in Patent Document 2, an objective reference distance is calculated on the basis of a lens focal distance of an electronic camera, an image segment length of a specific segment in an image of an object to be photographed by the electronic camera and a real segment length on CAD data of the object corresponding to the specific segment. An optical axis direction of the electronic camera at a time point when the objective reference distance has been measured is set as a distance coordinate axis. In addition, a value on the distance coordinate axis relating to a relative position between the electronic camera and the object at the time point of measurement is stored as a reference coordinate value. A difference between a current coordinate value on the distance coordinate axis relating to a current position of the electronic camera or the object and the reference coordinate value is added to the objective reference distance to calculate an objective distance at the current position.

Prior Art Document

Patent Document

Patent Document 1: Japanese Published Unexamined Patent Application No. 2008-30296
Patent Document 2: Japanese Published Unexamined Patent Application No. 2004-354320

Summary of the Invention

Problem to be Solved by the Invention

According to an inspection method, a method for producing composite material components, an inspection device, and a device for producing composite material components in the present invention, it is possible to measure a gap amount between fiber-reinforced plastic tapes with high accuracy.

Means for Solving the Problem

The present invention adopts the following configurations corresponding to each drawing shown in an embodiment. However, reference numerals given to each constituent only exemplify the constituents and shall not be construed to limit the constituents.

The inspection method of the present invention includes photographing an image by a camera (32) mounted on a lamination head (23) during a first fiber-reinforced plastic tape (70) is attached by the lamination head while the lamination head moves, and calculating a gap amount (Gk') the first fiber-reinforced plastic tape and a second fiber-reinforced plastic tape (71) on the basis of a first component of translational displacement ($\Delta Zk$) in an optical axis direction of the camera which is a translational displacement ($\Delta Uk$) of the lamination head during the attachment of the first fiber-reinforced plastic tape, an in-plane second component of translational displacement ($\Delta Tk$) which is perpendicular to the optical axis direction of the translational displacement, and the image.

Determining the gap amount may include calculating a shooting distance (Ak) when the image is photographed by the camera on the basis of the first component of translational displacement and the second component of translational displacement, and calculating the gap amount on the basis of the shooting distance and the image.

The lamination head may be provided with a lamination roller (26) which is in contact with the first fiber-reinforced plastic tape. A lamination-roller rotation axis (S2) of the lamination roller may be perpendicular to the optical axis direction. Determining the gap amount may include calculating a gap amount before correction between the first fiber-reinforced plastic tape and the second fiber-reinforced plastic tape on the basis of the image, calculating a shooting distance (Ak) when the image is photographed by the camera on the basis of the first component of translational displacement, the second component of translational displacement, and a distance (B) between a flat plane (C) including the lamination-roller rotation axis and parallel to the optical axis direction, and the camera, and calculating the gap amount by correcting the gap amount before correction on the basis of the shooting distance. While the attachment of the first fiber-reinforced plastic tape is in progress, a direction of the distance may be kept parallel to a direction of the second component of translational displacement.

The method for producing composite material components in the present invention includes attaching a first fiber-reinforced plastic tape (70) by a lamination head (23) while the lamination head moves during laminating a fiber-reinforced plastic tape, determining an attachment state of the first fiber-reinforced plastic tape, and stopping or continuing the lamination on the basis of the results determined regarding the attachment state. Determining the attachment state includes photographing an image by a camera (32) mounted on the lamination head during the attachment of the first fiber-reinforced plastic tape, calculating a gap amount (Gk') between the first fiber-reinforced plastic tape and a second fiber-reinforced plastic tape (71) on the basis of a first component of translational displacement ($\Delta Zk$) in an optical axis direction of the camera which is a translational displacement ($\Delta Uk$) of the lamination head during the attachment of the first fiber-reinforced plastic tape, an in-plane second component of translational displacement ($\Delta Tk$) which is perpendicular to the optical axis direction of the translational displacement, and the image, and stopping the lamination when the gap amount is greater than a predetermined threshold value.

The lamination head may be provided with a lamination roller (26) which is in contact with the first fiber-reinforced plastic tape. The lamination-roller rotation axis (S2) of the lamination roller may be perpendicular to the optical axis direction. Determining the gap amount may include calculating a shooting distance (Ak) when the image is photographed by the camera on the basis of the first component of translational displacement, the second component of translational displacement, and a distance (B) between a flat plane (C) including the lamination-roller rotation axis and parallel to the optical axis direction and the camera, and calculating the gap amount on the basis of the shooting distance and the image. A direction of the distance may be kept parallel to a direction of the second component of translational displacement while the attachment of the first fiber-reinforced plastic tape is in progress.

An inspection device (30) of the present invention includes a camera (32) mounted on a lamination head (23) of an automatic lamination device (20) which carries out lamination of fiber-reinforced plastic tape and an information processing device (34). The lamination head attaches a first fiber-reinforced plastic tape (70) during the lamination while the lamination head moves. An image is photographed by the camera during the attachment of the first fiber-reinforced plastic tape. The information processing device calculates a gap amount (Gk') between the first fiber-reinforced plastic tape and a second fiber-reinforced plastic tape (71) on the basis of a first component of translational displacement ($\Delta Zk$) in an optical axis direction of the camera which is a translational displacement ($\Delta Uk$) of the lamination head during attachment of the first fiber-reinforced plastic tape, an in-plane second component of translational displacement ($\Delta Tk$) which is perpendicular to the optical axis direction of the translational displacement, and the image.

The lamination head may be provided with a lamination roller (26) which is in contact with the first fiber-reinforced plastic tape. The lamination-roller rotation axis (S2) of the lamination roller may be perpendicular to the optical axis direction. The information processing device may calculate a shooting distance (Ak) when the image is photographed by the camera on the basis of the first component of translational displacement, the second component of translational displacement, and a distance (B) between a flat plane (C) including the lamination-roller rotation axis and parallel to the optical axis direction, and the camera, and may calculate the gap amount on the basis of the shooting distance and the image. The direction of the distance may be kept parallel to the direction of the second component of translational displacement, while the attachment of the first fiber-reinforced plastic tape is in progress.

The device for producing composite material components (10) of the present invention includes an automatic lamination device (20) which carries out lamination of fiber-reinforced plastic tape and an inspection device (30) which determines an attachment state of a first fiber-reinforced plastic tape (70) attached by the automatic lamination device during the lamination. The automatic lamination device is provided with a lamination head (23) which attaches the first fiber-reinforced plastic tape while the lamination head moves. The inspection device is provided with a camera (32) mounted on the lamination head and an information processing device (34). An image is photographed by the camera while the attachment of the first fiber-reinforced plastic tape is in progress. The information processing device calculates a gap amount (Gk') between the first fiber-reinforced plastic tape and a second fiber-reinforced plastic tape (71) on the basis of a first component of translational displacement ($\Delta Zk$) in an optical axis direction of the camera which is a translational displacement ($\Delta Uk$) of the lamination head while the attachment of the first fiber-reinforced plastic tape is in progress, an in-plane second component of translational displacement ($\Delta Tk$) which is perpendicular to the optical axis direction of the translational displacement, and the image. The information processing device outputs a lamination stopping signal when the gap amount is greater than a predetermined threshold value. The automatic lamination device stops the lamination on the basis of the lamination stopping signal.

The lamination head may be provided with a lamination roller (26) which is in contact wit the first fiber-reinforced plastic tape. The lamination-roller rotation axis (S2) of the lamination roller may be perpendicular to the optical axis direction. The information processing device may calculate a shooting distance (Ak) when the image is photographed by the camera on the basis of the first component of translational displacement, the second component of translational displacement, and a distance (B) between a flat plane (C) including the lamination-roller rotation axis and parallel to the optical axis direction, and the camera, and may calculate the gap amount on the basis of the shooting distance and the image. A direction of the distance may be kept parallel to a direction of the second component of translational displacement while attachment of the first fiber-reinforced plastic tape is in progress.

Effect of the Invention

According to the inspection method, the method for producing composite material components, the inspection device and the device for producing composite material components in the present invention, it is possible to measure a gap amount between fiber-reinforced plastic tapes with high accuracy.

Brief Description of the Drawings

Fig. 1 is a top view of a device for producing composite material components in a first embodiment of the present invention.
Fig. 2 is a cross sectional view taken along the line A to A of the device for producing composite material components of Fig. 1.
Fig. 3 is a side view of a lamination head of the device for producing composite material components of Fig. 1.
Fig. 4 is a top view which covers a lamination roller, a camera and a lighting of Fig. 3.
Fig. 5 is a side view which covers the lamination roller, the camera and the lighting of Fig. 3.
Fig. 6 is a block diagram which shows the device for producing composite material components in the first embodiment of the present invention.
Fig. 7 shows a case that a tape which has already been attached and which is near a tape in the process of attachment exists. More particularly, (a) is a cross sectional view of a site when a gap exists between the tape in the process of attachment and the tape which has already been attached, (b) is a view which shows an image of the site, and (c) is a view which shows the brightness distribution at the image.
Fig. 8 shows a case that a tape which has already been attached and which is near a tape in the process of attachment exists. More particularly, (a) is a cross sectional view of a site when the tape in the process of attachment overlaps with the tape which has already been attached, (b) is a view which shows an image of the site, and (c) is a view which shows brightness distribution at the image.
Fig. 9(a), (b), (c), (d) and (e) respectively show the lamination head in preparation of attachment, the lamination head at the start of attachment, the lamination head in the process of attachment, the lamination head on completion of attachment and the lamination head on standby for attachment.
Fig. 10 shows inspection data obtained when it is determined that a gap exists at a certain site of the plurality of sites from an attachment starting site to an attachment ending site of a tape and overlapping exists at other sites.
Fig. 11 shows inspection data obtained when it is determined that a gap exists at all of the plurality of sites from an attachment starting site to an attachment ending site of a tape.
Fig. 12 shows a relationship between an inclination angle on the surface of an attachment object and a shooting distance.
Fig. 13 shows a relationship between a component of translational displacement of the lamination head in the optical axis direction (Z axis direction), an in-plane component perpendicular to translational displacement and the inclination angle on the surface of the attachment object.

Mode for Carrying Out the Invention

With reference to attached drawings, hereinafter, a description will be given of embodiments for carrying out the inspection method, the method for producing composite material components, the inspection device and the device for producing composite material components in the present invention.

(First embodiment)

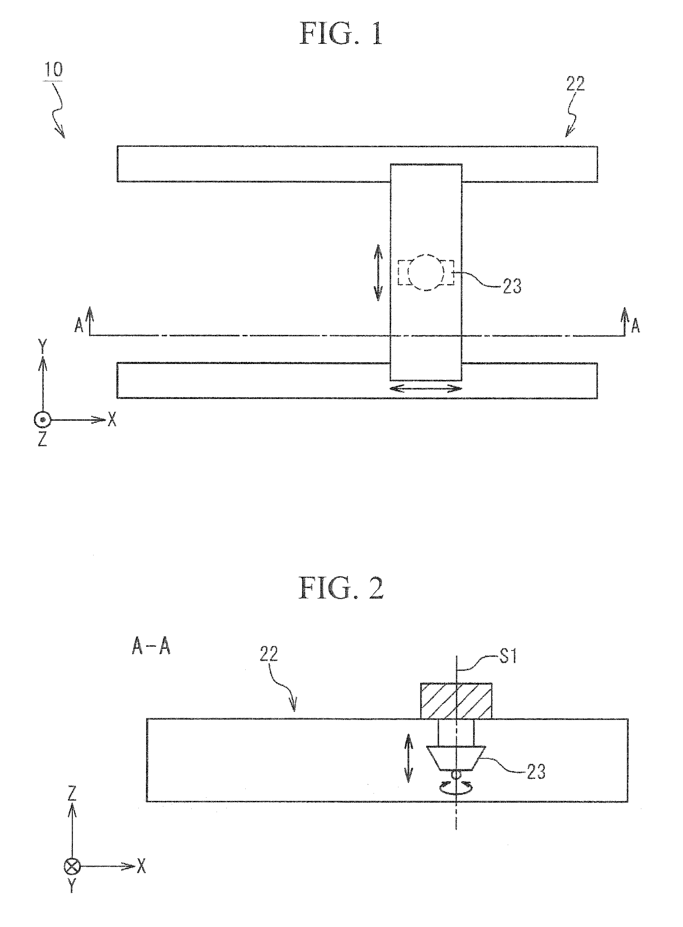

A description will be given of a device for producing composite material components 10 in the first embodiment of the present invention with reference to Fig. 1. The device for producing composite material components 10 produces composite material components by laminating a fiber-reinforced plastic tape. The device for producing composite material components 10 is provided with a driving device 22 and a lamination head 23. An X axis, a Y axis and a Z axis which are orthogonal to each other are defined with regard to the device for producing composite material components 10. The Z axis is an axis which faces upward perpendicularly. The driving device 22 drives the lamination head 23 in a translational manner so as to be parallel to the X axis and also parallel to the Y axis.

In Fig. 2, the driving device 22 drives the lamination head 23 in a translational manner so as to be parallel to the Z axis and also drives the lamination head 23 in a rotational manner around a rotation axis S1 parallel to the Z axis. The driving device 22 is provided with three servo mechanisms corresponding respectively to the above-described three types of translational driving and a servo mechanism corresponding to the above-described rotational driving.

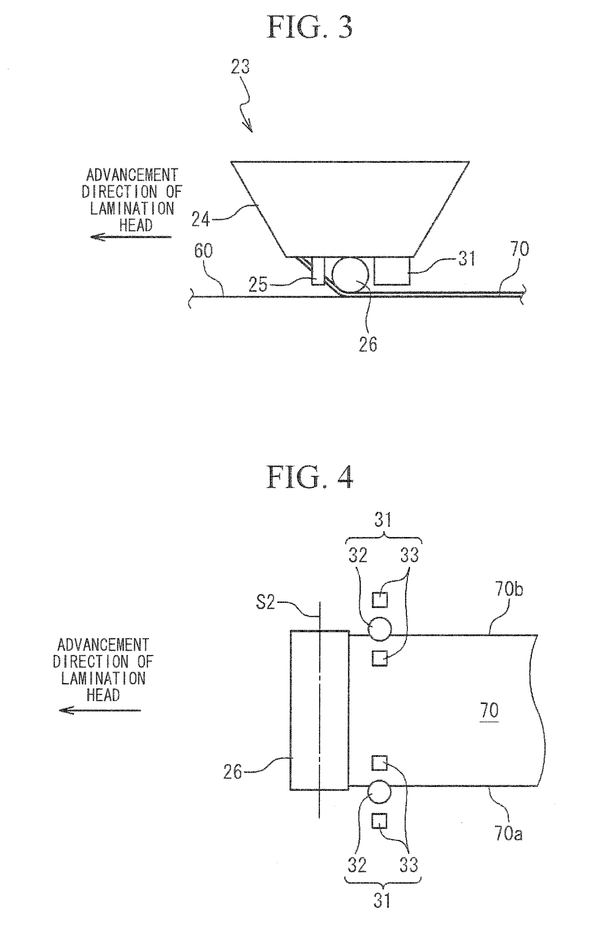

In Fig. 3, the lamination head 23 is driven by the driving device 22 and moves with respect to an attachment object 60. The lamination head 23 attaches a fiber-reinforced plastic tape 70 to the attachment object 60, while moving. Here, the attachment object 60 is a mold or a laminated body of fiber-reinforced plastic tape laminated on the mold. The lamination head 23 is provided with a tape supplying device 24, a cutter 25 and a lamination roller 26. Two camera units 31 are mounted on the lamination head 23. The tape supplying device 24 feeds out the tape 70. The lamination roller 26 presses and attaches the fed-out tape 70 to the attachment object 60. The lamination roller 26 is in contact with the tape 70 and presses it to the attachment object 60.

In Fig. 4, the lamination roller 26 presses the tape 70 to the attachment object 60, while rotating around a rotation axis S2 and rolling on the tape 70. The rotation axis S2 is perpendicular to the rotation axis S1 and parallel to the width direction of the tape 70. The tape 70 is provided on both sides in the width direction respectively with a side end 70a and a 70b. The two camera units 31 are arranged on the rear side in a direction at which the lamination head 23 moves with respect to the lamination roller 26 (an advancement direction) so as to photograph an attachment state of the tape 70. These two camera units 31 are arranged at such positions that correspond respectively to the side ends 70a and 70b. Hereinafter, there is a case that the camera unit 31 corresponding to the side end 70a is referred to as a left-side camera unit 31. In addition, there is a case that the camera unit 31 corresponding to the side end 70b is referred to as a right-side camera unit 31. The left-side camera unit 31 is provided with a camera 32 which is arranged directly above the side end 70a and faces the side end 70a, a lighting 33 which is arranged at a position deviated outside in the width direction of the tape 70 from directly above the side end 70a and also facing the side end 70a, and a lighting 33 which is arranged at a position deviated inside in the width direction of the tape 70 from directly above the side end 70a and also facing the side end 70a. The right-side camera unit 31 is provided with a camera 32 which is arranged directly above the side end 70b and faces to the side end 70b, a lighting 33 which is arranged at a position deviated outside in the width direction of the tape 70 from directly above the side end 70b and also facing to the side end 70b, and a lighting 33 which is arranged at a position deviated inside in the width direction of the tape 70 from directly above the side end 70b and also facing to the side end 70a. That is, the lightings 33 are arranged at positions deviated along a straight line parallel to the rotation axis S2 from directly above the side ends 70a and 70b. The camera 32 is, for example, a CCD (charge coupled device) camera. A light axis of the camera 32 is parallel to the Z axis. The lightings 33 are, for example, LED (light emitting diode) lightings.

As described above, since the lightings 33 irradiate light obliquely at a fiber-reinforced plastic tape, the side ends of the fiber-reinforced plastic tape are highlighted at an image photographed by the camera units 31.

The side end 70a is included in a photographing range of the left-side camera unit 31 but not included in a photographing range of the right-side camera unit 31. The side end 70b is included in the photographing range of the right-side camera unit 31 but is not included in the photographing range of the left-side camera unit 31.

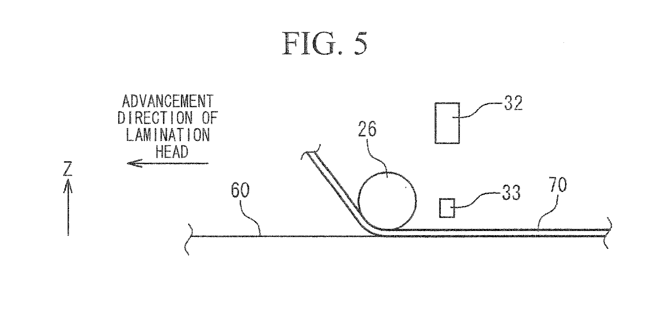

In Fig. 5, the camera 32 and the lighting 33 are arranged in such a manner that a distance between the camera 32 and the tape 70 in the Z axis direction is greater than a distance between the lighting 33 and the tape in the Z axis direction.

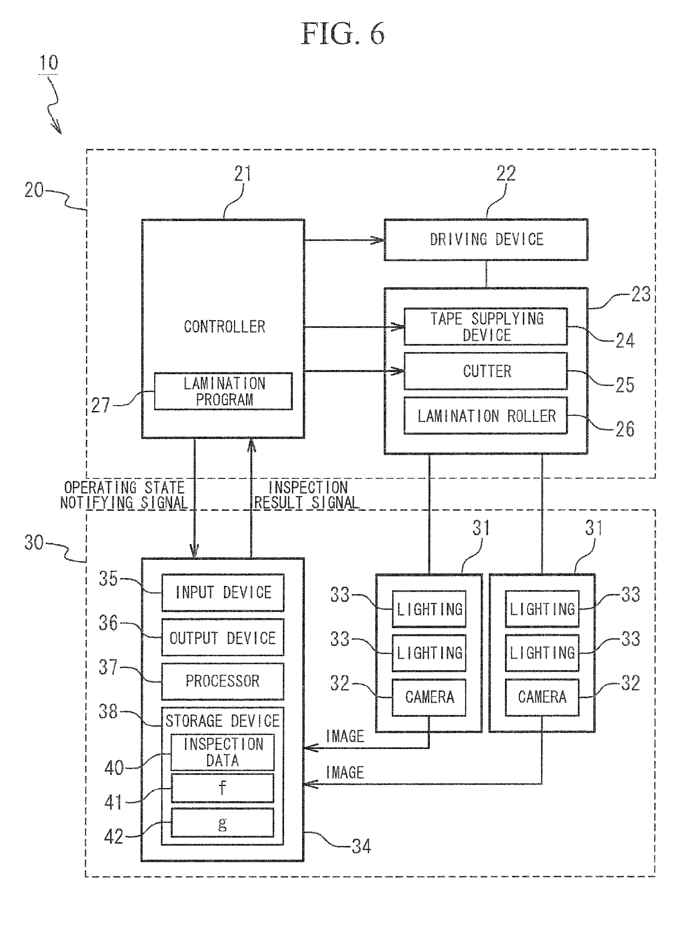

In Fig. 6, the device for producing composite material components 10 is provided with an automatic lamination device 20 and an inspection device 30. The automatic lamination device 20 is provided with a controller 21, in addition to the already described driving device 22 and the lamination head 23. The inspection device 30 is provided with an information processing device 34 as a computer for inspection, in addition to the already described two camera units 31. The information processing device 34 is provided with an input device 35, an output device 36, a processor 37, and a storage device 38.

The automatic lamination device 20 carries out lamination of fiber-reinforced plastic tape according to the lamination program (lamination procedures) 27. The controller 21 controls the driving device 22, the tape supplying device 24, and the cutter 25 in order to carry out lamination of the fiber-reinforced plastic tape on the basis of the lamination program 27. The controller 21 controls the driving device 22 in such a manner that during attachment of the tape 70, the rotation axis S2 of the lamination roller 26 is made perpendicular to a direction at which the lamination head 23 moves. Further, the controller 21 outputs to the inspection device 30 an operating state notifying signal for notifying an operating state of the automatic lamination device 20.

The inspection device 30 determines an attachment state of the fiber-reinforced plastic tape 70 attached by the automatic lamination device 20 on the basis of an image photographed by the camera 32 thereby generating inspection data 40 which shows the results of the determination. The inspection device 30 is able to utilize functions 40 and 41 stored by a storage device 38 in order to generate the inspection data 40. The storage device 38 stores the inspection data 40. The inspection device 30 determines whether or not the fiber-reinforced plastic tape 70 is properly attached on the basis of the inspection data 40, thereby outputting an inspection result signal which shows the results of the determination.

The automatic lamination device 20 stops or continues lamination of the fiber-reinforced plastic tape on the basis of the inspection result signal.

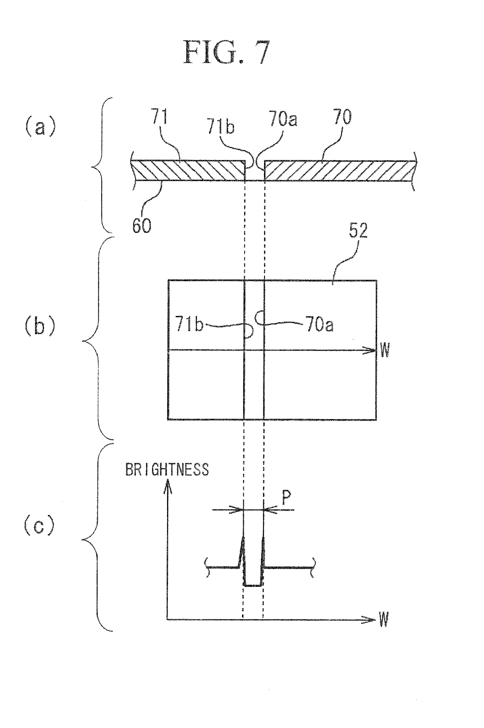

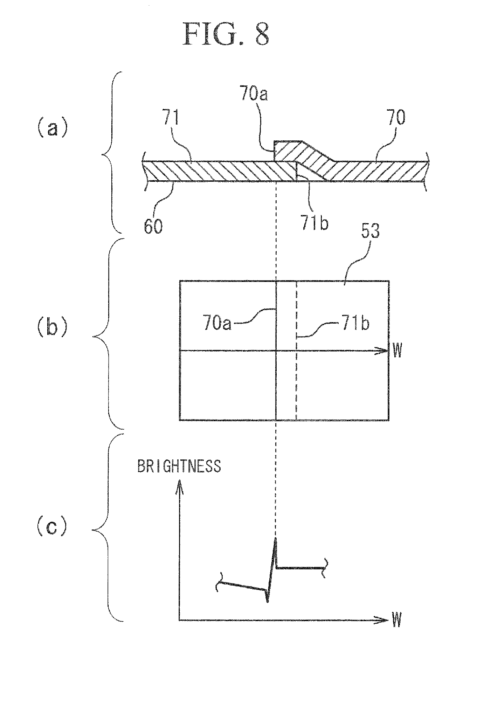

Here, the lamination program 27 stipulates that the tape 70 and a fiber-reinforced plastic tape 71 to be attached prior to the tape 70 are arranged on the same layer of a composite material component and attached adjacently in parallel to each other so as not to overlap with each other. As shown in Fig. 7(a), the lamination program 27 stipulates that the fiber-reinforced plastic tape 71 exists at a side end 70a of the tape 70 and also a gap (gap amount) having a predetermined dimension exists between a side end 71b of the tape 71 on the side of the tape 70 and the side end 70a. In this instance, the predetermined gap amount is set to be such a value that both the side end 70a and the side end 71 b exists in the photographing range of the left-side camera unit 31. However, as shown in Fig. 8(a), the lamination program 27 does not stipulate that the tape 70 and the tape 71 overlap with each other. The tape 71 is attached prior to the tape 70. Therefore, as shown in Fig. 8(a), the side end 70a is arranged on the tape 71, while the side end 71 b is arranged under the tape 70.

A description will be given of a case when, as shown in Fig. 7(a), the tape 70 and the tape 71 exist in the photographing range of the left-side camera unit 31. As shown in Fig. 7(b), the side ends 70a and 71b are taken at an image 52 photographed by the camera 32 of the left-side camera unit 31. The W axis of the image 52 is parallel to a width direction of the tape 70. Fig. 7(c) shows brightness distribution on the W axis of the image 52. The brightness distribution has a rise (peak) corresponding to the side end 70a and a rise corresponding to the side end 71b.

As shown in Fig. 8(a), a description will be given of a case where attachment is carried out in such a manner that the tape 70 overlaps with the tape 71 in the photographing range of the left-side camera unit 31. As shown in Fig. 8(b), only the side end 70a is taken at an image 53 photographed by the camera 32 of the left-side camera unit 31, while the side end 71b is not taken since it is under the tape 70. The W axis of the image 53 is parallel to the width direction of the tape 70. Fig. 8(c) shows brightness distribution on the W axis of the image 53. The brightness distribution has only a rise corresponding to the side end 70a.

As shown in Fig. 8(c), the processor 37 determines that when there is one rise in brightness detected from an image, the tape 70 overlaps with the tape 71 at a site at which the image is photographed. As shown in Fig. 7(c), the processor 37 determines that when there are two rises in brightness detected from an image, a gap exists between the tape 70 and the tape 71 adjacent to the tape 70 at a site at which the image is photographed and calculates a gap amount on the basis of a distance P between the two rises. Here, it is possible to detect a rise in brightness by using a publicly known method for detecting edges.

The lamination program 27 may stipulate that the tape 71 is arranged on the side end 70b side of the tape 70.

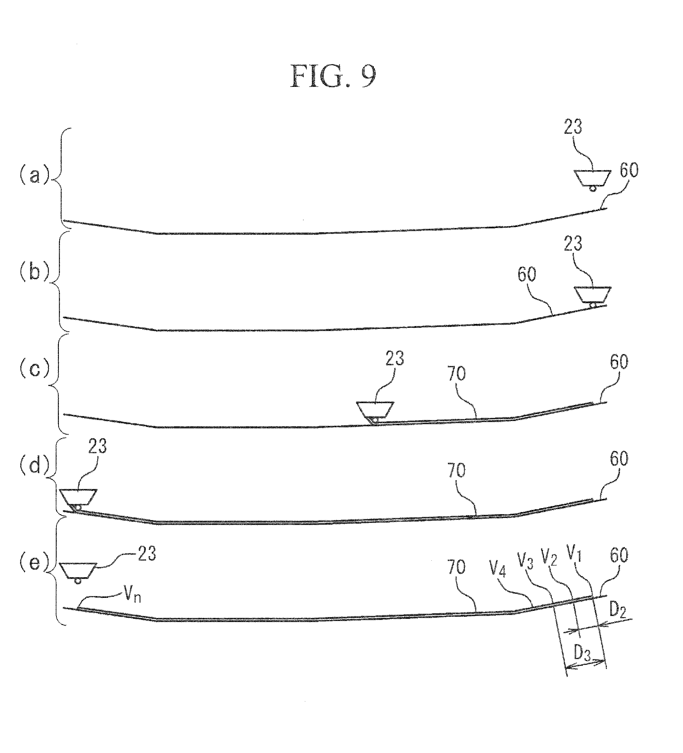

With reference to Fig. 9, a description will be given of the method for producing composite material components which is carried out by the device for producing composite material components 10.

An automatic lamination device 9 laminates a fiber-reinforced plastic tape in accordance with a lamination program 27. Fig. 9(a) shows a state in preparation for lamination while the lamination is in progress. The lamination preparation state is a state after the tape 71 has been attached to the attachment object 60 and also before the tape 70 is attached to the attachment object 60. In this instance, a lamination head 23 is arranged so as to be apart from an attachment object 60.

A controller 21 allows the lamination head 23 to move in the Z axis direction by using a driving device 22, thereby sandwiching an attachment starting site of a tape 70 between a lamination roller 26 and the attachment object 60. Fig. 9(b) shows the above-described state.

After the controller 21 outputs an attachment starting signal as an operating state notifying signal, the automatic lamination device 20 starts to attach the tape 70. During attachment of the tape 70, the controller 10 drives the driving device 22 by controlling a value in such a manner that the lamination head 23 moves on a path designated by the lamination program 27. During attachment of the tape 70, a tape supplying device 24 feeds out the tape 70, and the lamination roller 26 presses and attaches the fed-out tape 70 to the attachment object 60. During attachment of the tape 70, the lamination head 23 rotates around a rotation axis S1 parallel to the optical axis direction of the camera 32 in such a manner that the rotation axis S2 is perpendicular to a direction at which the lamination head 23 moves. During attachment of the tape 70, the controller 21 outputs an operating state signal which shows X, Y, Z coordinates of the lamination head 23 at regular time intervals. Fig. 9 (c) shows a state that attachment of the tape 70 is in progress.

The controller 21 stops the movement of the lamination head 23 by using the driving device 22 when the lamination head 23 arrives at an attachment ending position designated by the lamination program 27, cuts the tape 70 by using a cutter 25 and outputs an attachment ending signal. In this instance, an attachment ending site of the tape 70 is sandwiched between the lamination roller 26 and the attachment object 60. Fig. 9(d) shows a state that the lamination head 23 stops at an attachment ending position.

The controller 21 allows the lamination head 23 to move in the Z axis direction by using the driving device 22, by which the lamination head 23 is kept at a stand-by position away from the attachment object 60. Fig. 9(e) shows a state that the lamination head 23 is kept at the stand-by position. The controller 21 waits for an inspection result signal from the inspection device 30, with the lamination head 23 kept at the stand-by position.

A description will be given of motions of the inspection device 30 during attachment of a tape 70. The camera 32 starts photographing at regular time intervals in response to an attachment starting signal and finishes photographing in response to an attachment ending signal. Thereby, the camera 32 takes photographs of the respective images at a plurality of sites V1 to Vn from an attachment starting site V1 to an attachment ending site Vn of the tape 70, thereby photographing a plurality of images. The processor 37 obtains coordinates (X, Y, Z) of the lamination head 23 at a position U when the camera 32 takes a photograph of each site of the plurality of sites V1 to Vn on the basis of the operating state signal which shows the X, Y, Z coordinates of the lamination head 23. The processor 37 calculates a distance D between each of the plurality of sites and the attachment starting site V1 on the basis of the operating state signal which shows the X, Y, Z coordinates of the lamination head 23. Further, the processor 37 detects a rise in brightness from each image of the plurality of images at the plurality of sites V1 to Vn and determines whether or not the tape 70 overlaps with the tape 71 or a gap exists between the tape 70 and the tape 71 on the basis of the number of rises in brightness detected from each image. The processor 37 determines that the tape 70 overlaps with the tape 71, when the number of rises in brightness is one. The processor 37 determines that a gap exists between the tape 70 and the tape 71, when the number of rises in brightness is two. When the number of rises in brightness is two (a gap is determined to exist), the processor 37 calculates a gap amount G between the tape 70 and the tape 71 on the basis of a distance between the rises in brightness.

The processor 37 generates inspection data 40 and stores the data at a storage device 38. With regard to all the plurality of sites V1 to Vn from the attachment starting site V1 to the attachment ending site Vn of the tape 70, the inspection data 40 shows the coordinates (X, Y, Z) of the lamination head 23 at the position U, a distance D from an attachment starting site V1, results of the determination on overlapping or existence of a gap, and a gap amount G on determination of existence of the gap. The processor 37 determines whether or not the tape 70 is attached properly on the basis of the inspection data 40 and outputs an inspection result signal showing the results of the determination.

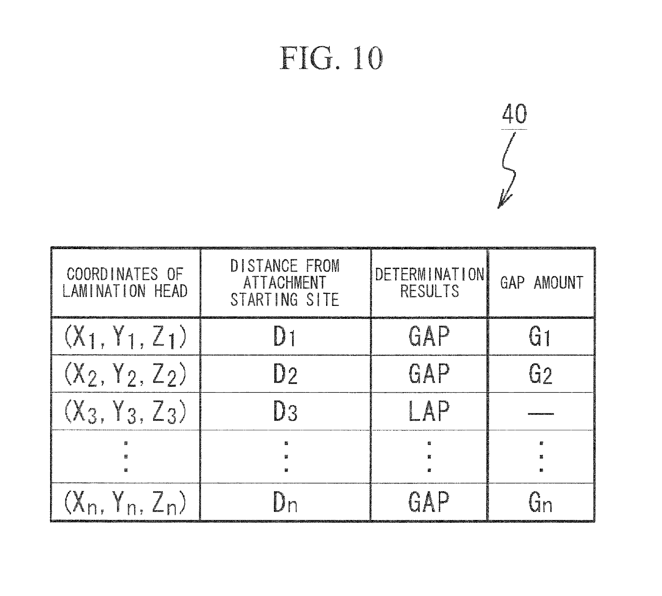

Fig. 10 shows the inspection data 40 when it is determined that a gap (GAP) exists at sites V1, V2, and Vn, each distance of which from the attachment starting site V1 is D1, D2, and Dn, among the plurality of sites V1 to Vn from the attachment starting site V1 to the attachment ending site Vn of the tape 70 and that overlapping (LAP) exists at the site V3, a distance of which from the attachment starting site V1 is D3, among the plurality of sites V1 to Vn. Here, a site whose distance is D1 (=0) from the attachment starting site V1 is the attachment starting site V1, and a site whose distance is Dn from the attachment starting site V1 is an attachment ending site Vn. As shown in Fig. 10, when it is determined that a gap exists in at least a site of the tape 70 and overlapping exists in at least a site, the inspection device 37 determines that attachment of the tape 70 has not been properly carried out and outputs a lamination stopping signal as an inspection result signal.

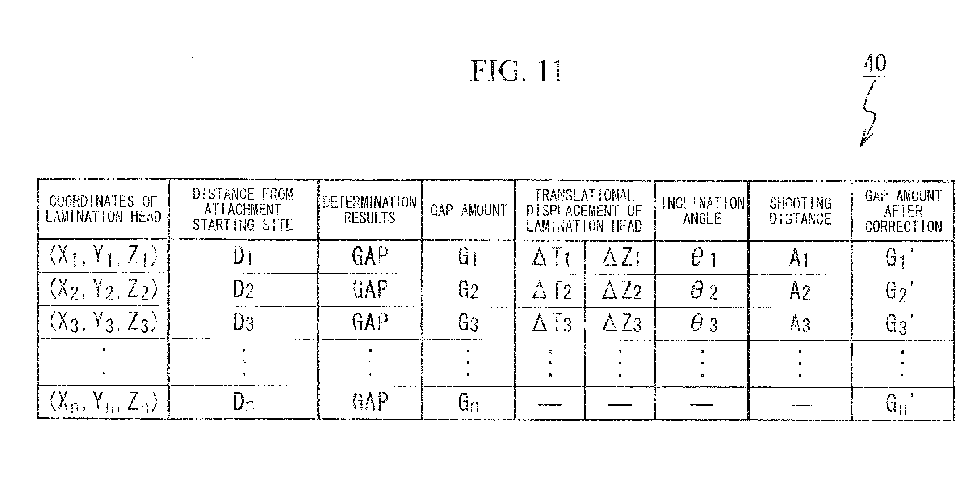

Fig. 11 shows the inspection data 40 when it is determined that a gap exists at all of the plurality of sites V1 to Vn from the attachment starting site V1 to the attachment ending site Vn of the tape 70. The inspection data 70 shows that a gap (GAP) exists at the plurality of sites V1 to Vn, each distance from the attachment starting site V1 is D1 to Dn and each gap amount is G1 to Gn.

Here, since the camera 32 is constant in focal distance, there is a case where a gap amount G obtained from an image is greater or smaller than an actual gap amount due to variation in shooting distance A between the camera 32 and an object. Therefore, as shown in Fig. 11, when it is determined that a gap exists at all of the plurality of sites V1 to Vn from the attachment starting site V1 to the attachment ending site Vn of the tape 70, the processor 37 corrects a gap amount G on the basis of the shooting distance A and calculates a gap amount G' after correction. Hereinafter, a description will be given of a method by which the gap amount G is corrected to calculate the gap amount G' after correction on the basis of the shooting distance A.

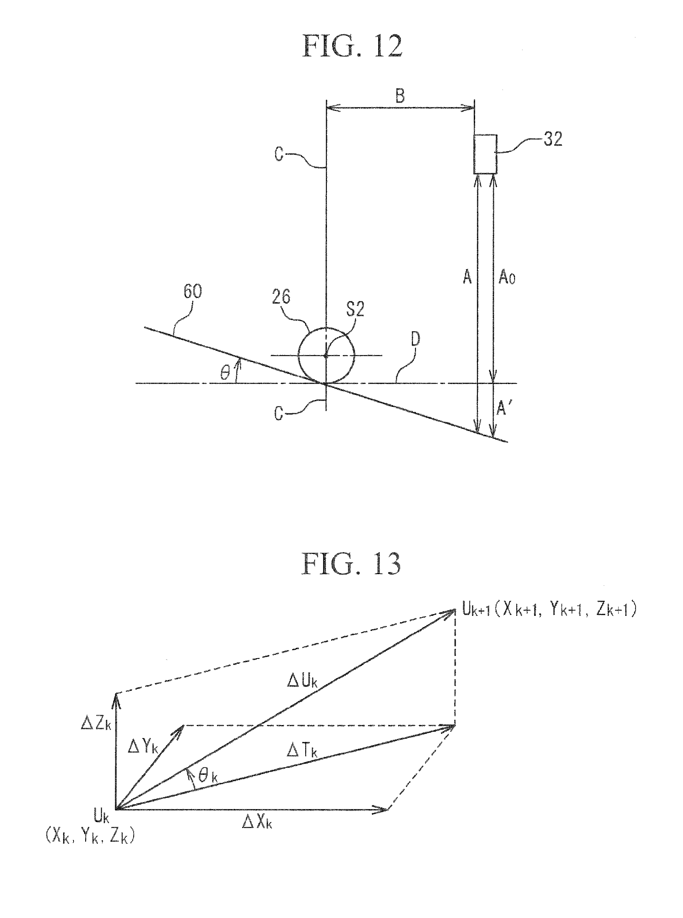

In Fig. 12, an angle between a segment which is common to a flat plane including the optical axis of the camera 32 and perpendicular to the lamination-roller rotation axis S2 and to the surface of the attachment object 60 and a segment which is common to a flat plane including the optical axis of the camera 32 and perpendicular to the lamination-roller rotation axis S2 and to a flat plane D perpendicular to the optical axis of the camera 32 is referred to as an inclination angle $\theta$ on the surface of the attachment object 60. The shooting distance A is approximately equal to a distance in the optical axis direction between the attachment object 60 and the camera 32 and varies according to the inclination angle θ. When the surface of the attachment object 60 is perpendicular to the optical axis of the camera 32, the shooting distance A is equal to a distance A0 in the optical axis direction between the camera 32 and the flat plane D, and the inclination angle θ is zero degrees. Here, a value of the shooting distance A when the inclination angle θ is positive is greater than a value of the shooting distance A when the inclination angle θ is negative. A relationship between displacement A' on the optical axis of the camera 32 with respect to the flat plane D on the surface of the attachment object 60, distance A0 and shooting distance A can be expressed by the following formula.

[Formula 1]

$$A_0 + A' = A \qquad \cdots (1)$$

In the above formula, when the inclination angle θ is positive, the displacement A' is positive, and, when the inclination angle θ is negative, the displacement A' is negative. Further, a relationship between a distance B between a flat plane C including the lamination-roller rotation axis S2 and parallel to the optical axis of the camera 32 and (the optical axis) of the camera 32 (in a normal-line direction of the flat plane C), an inclination angle θ, and a displacement A' can be approximated by the following formula.

[Formula 2]

$$A' = B \tan \theta \qquad \cdots (2)$$

The function 41 is a function for determining the shooting distance A from the inclination angle θ and defined by the following formula.

[Formula 3]

$$A = f(\theta) = A_0 + B \tan \theta \qquad \cdots (3)$$

Here, the distance A0 and the distance B are given as constant numbers.

In Fig. 13, a component which is parallel to the Z axis (the optical axis of the camera 32) of displacement ΔUk with regard to a position Uk of the lamination head 23 when an image at a site Vk of the tape 70 has been photographed and a position Uk + 1 of the lamination head 23 when an image at a site Vk + 1 of the tape 70 has been photographed is expressed as ΔZk. Further, a component which is inside a plane (an XY flat plane) perpendicular to the Z axis (the optical axis of the camera 32) of the displacement ΔUk is expressed as ΔTk. Here, k is an arbitrary integer from 1 to n-1. An inclination angle θk of the attachment object 60 corresponding to the site Vk of the tape 70 can be calculated by the following formula.

[Formula 4]

$$\theta_k = \arctan\left(\frac{\Delta Z_k}{\Delta T_k}\right) \qquad \cdots (4)$$

Here, the inclination angle θk is greater than -90 degrees but smaller than 90 degrees. And when ΔZk is positive, the inclination angle θk is positive. Here, the lamination head 23 rotates around the rotation axis S1 in such a manner that the rotation axis S2 of the lamination roller 26 is perpendicular to a direction at which the lamination head 23 moves during attachment of the tape 70. Therefore, a direction of the distance B is kept parallel to a direction of the component ΔTk, and the inclination angle θ matches the inclination angle θk. The component ΔZk of translational displacement ΔUk of the lamination head 23 in the optical axis direction and the in-plane component ΔTk perpendicular to the optical axis direction are calculated by referring to coordinates (Xk, Yk, Zk) at the position Uk and coordinates (Xk + 1, Yk + 1, Zk + 1) at the position Uk +1 on the basis of the following formulae.

[Formula 5]

$$\Delta Z_k = Z_{k+1} - Z_k \qquad \cdots (5)$$

[Formula 6]

$$\Delta T_k = \sqrt{\left(\Delta X_k\right)^2 + \left(\Delta Y_k\right)^2}$$
$$= \sqrt{\left(X_{k+1} - X_k\right)^2 + \left(Y_{k+1} - Y_k\right)^2} \qquad \cdots (6)$$

The function 42 is a function for correcting a gap amount G on the basis of the shooting distance A to determine a gap amount G' after correction. The function is defined by the following formula.

[Formula 7]

$$G' = g(A, G) \qquad \cdots (7)$$

The function 42 is determined in advance geometrically or by calibration.

In Fig. 11, on the basis of the coordinates (Xk, Yk, Zk) at the position Uk of the lamination head 23 on photographing an image at the site Vk, the coordinates (Xk + 1, Yk + 1, Zk + 1) at the position Uk + 1 of the lamination head 23 on photographing an image at the site Vk + 1 and the above-described formulae (5) and (6), the processor 37 calculates the component ΔZk of translational displacement ΔUk of the lamination head 23 corresponding to the site Vk in the optical axis direction of the camera 32 and the in-plane component ΔTk perpendicular to the optical axis direction, when k=1, ..., n-1. On the basis of components ΔZk and ΔTk of translational displacement ΔUk of the lamination head 23 and the above-described formula (4), the processor 37 calculates an inclination angle θk corresponding to the site Vk, when k=1, ..., n-1. On the basis of the inclination angle θk and the function 41, the processor 37 calculates a shooting distance Ak on photographing an image at the site Vk, when k=1, ..., n-1. On the basis of the shooting distance Ak, the gap amount Gk and the function 42, the processor 37 calculates a gap amount Gk' after correction at the site Vk, when k=1, ..., n-1. Further, on the basis of a shooting distance An -1, a gap amount Gn and the function 42, the processor 37 calculates a gap amount Gn' after correction at the site Vn. The processor 37 adds components ΔT1 to ΔTn -1 and component ΔZ1 to ΔZn -1 of translational displacement of the lamination head 23 as well as inclination angles θ1 to θn -1, shooting distances A1 to An -1, and gap amounts G1' to Gn' to the inspection data 40.

The processor 37 compares each of the gap amounts Gl' to Gn' after correction with a predetermined threshold value. When all the gap amounts G1' to Gn' after correction are smaller than the predetermined threshold value, the processor 37 determines that the tape 70 has been properly attached and outputs a lamination continuing signal as an inspection result signal. When at least any one of the gap amounts G1' to Gn' after correction is greater than the predetermined threshold value, the processor 37 determines that the tape 70 has not been properly attached and outputs a lamination stopping signal as an inspection result signal.

The automatic lamination device 20 continues to laminate a fiber-reinforced plastic tape on the basis of the lamination continuing signal. In this instance, the controller 21 allows the lamination head 23 to move from a stand-by position on the basis of the lamination continuing signal in order to attach a next tape.

The automatic lamination device 20 stops lamination of the fiber-reinforced plastic tape on the basis of the lamination stopping signal. In this instance, an operator determines visually an attachment state of the tape 70 and operates the automatic lamination device 20 for attaching the tape 70 again when re-attachment is necessary. When the re-attachment is not necessary, the operator operates the automatic lamination device 20 to attach a next tape.

According to the present embodiment, a gap amount between the fiber-reinforced plastic tapes can be measured with high accuracy. Therefore, an attachment state of the tape 70 can be determined correctly on the basis of the gap amount. Accordingly, it is possible to prevent unnecessary stopage of lamination or failure in carrying out re-attachment when it is necessary. As a result, the device for producing composite material components 10 is improved in throughput and also composite material components produced by the device for producing composite material components 10 are improved in quality. Further, according to the present embodiment, even if no sensor for measuring a shooting distance is mounted on the lamination head 23, a gap amount between the fiber-reinforced plastic tapes can be measured with high accuracy.

The present embodiment can be modified in various ways.

For example, composite functions of the above-described formulae (3), (4) and (7) may be used to calculate a gap amount G' after correction by referring to components $\Delta T$ and $\Delta Z$ of translational displacement $\Delta U$ of the lamination head 23 and a gap amount G.

As described above, in place of correcting the gap amount G to calculate the gap amount G' after correction, a gap amount corresponding to the gap amount G' after correction may be directly determined on the basis of an image at a site V of the tape 70 and the components $\Delta T$, $\Delta Z$ of translational displacement of the lamination head 23.

Further, in place of a method by which the above-described inspection device 30 automatically outputs a lamination continuing signal or a lamination stopping signal on the basis of the inspection data 40, the following method can be adopted. In this method, the output device 36 outputs result data 40. An operator determines whether or not the tape 70 is properly attached on the basis of the output result data 40 and allows the inspection device 30 to output a lamination continuing signal or a lamination stopping signal by operating the input device 35.

A description has been so far made for a preferred embodiment of the present invention, to which the present invention shall not be limited to these embodiments. The present invention may be subjected to addition of the configuration, omission, replacement and other modifications within a scope not departing from the gist of the present invention. The present invention shall not be limited to the above description but will be limited only by the scope of the attached claims.

Industrial Applicability

According to the inspection method, the method for producing composite material components, the inspection device, and the device for producing composite material components in the present invention, it is possible to measure a gap amount between the fiber-reinforced plastic tapes with high accuracy. Description of Reference Numerals

10: Device for producing composite material components
20: Automatic lamination device
21: Controller
22: Driving device
23: Lamination head
24: Tape supplying device
25: Cutter
26: Lamination roller
27: Lamination program
30: Inspection device
31: Camera unit
32: Camera
33: Lighting
34: Information processing device
35: Input device
36: Output device
37: Processor
38: Storage device
40: Inspection data

41: Function
42: Function
52: Image
53: Image
60: Attachment object (mold or laminated body)
70: Tape
71: Tape
70a: Side end
70b: Side end
71b: Side end
S1: Rotation axis of lamination head
S2: Rotation axis of lamination roller

**Claims**

1. An inspection method comprising:

    photographing an image by a camera mounted on a lamination head during a first fiber-reinforced plastic tape is attached by the lamination head while the lamination head moves; and
    calculating a gap amount between the first fiber-reinforced plastic tape and a second fiber-reinforced plastic tape on the basis of a first component of translational displacement in an optical axis direction of the camera which is a translational displacement of the lamination head during the attachment of the first fiber-reinforced plastic tape, an in-plane second component of translational displacement which is perpendicular to the optical axis direction of the translational displacement, and the image.

2. The inspection method according to claim 1, wherein determining the gap amount comprises:

    calculating a shooting distance when the image is photographed by the camera on the basis of the first component of translational displacement and the second component of translational displacement; and
    calculating the gap amount on the basis of the shooting distance and the image.

3. The inspection method according to claim 1, wherein the lamination head is provided with a lamination roller which is in contact with the first fiber-reinforced plastic tape,
a lamination-roller rotation axis of the lamination roller is perpendicular to the optical axis direction,
determining the gap amount comprises:

    calculating a gap amount before correction between the first fiber-reinforced plastic tape and the second fiber-reinforced plastic tape on the basis of the image; and
    calculating a shooting distance when the image is photographed by the camera on the basis of the first component of translational displacement, the second component of translational displacement, and a distance between a flat plane including the lamination-roller rotation axis and parallel to the optical axis direction and the camera; and
    calculating the gap amount by correcting the gap amount before correction on the basis of the shooting distance, and

    a direction of the distance is kept parallel to a direction of the second component of translational displacement while the attachment of the first fiber-reinforced plastic tape in progress.

4. A method for producing composite material components comprising:

    attaching a first fiber-reinforced plastic tape by a lamination head while the lamination head moves during laminating a fiber-reinforced plastic tape;
    determining an attachment state of the first fiber-reinforced plastic tape; and
    stopping or continuing the lamination on the basis of the results determined regarding the attachment state,
    wherein determining the attachment state comprises:

        photographing an image by a camera mounted on the lamination head during the attachment of the first fiber-reinforced plastic tape;
        calculating a gap amount between the first fiber-reinforced plastic tape and a second fiber-reinforced plastic tape on the basis of a first component of translational displacement in an optical axis direction of the camera which is a translational displacement of the lamination head during the attachment of the first fiber-reinforced plastic tape, an in-plane second component of translational displacement which is perpendicular to the optical axis direction of the translational displacement, and the image; and

stopping the lamination when the gap amount is greater than a predetermined threshold value.

5. The method for producing composite material components according to claim 4, wherein
the lamination head is provided with a lamination roller which is in contact with the first fiber-reinforced plastic tape,
the lamination-roller rotation axis of the lamination roller is perpendicular to the optical axis direction,
determination of the gap amount comprises:

calculating a shooting distance when the image is photographed by the camera on the basis of the first component of translational displacement, the second component of translational displacement, and a distance between a flat plane including the lamination-roller rotation axis and parallel to the optical axis direction and the camera; and
calculating the gap amount on the basis of the shooting distance and the image, and
a direction of the distance is kept parallel to a direction of the second component of translational displacement while the attachment of the first fiber-reinforced plastic tape is in progress.

6. An inspection device comprising:

a camera mounted on a lamination head of an automatic lamination device which carries out a lamination of fiber-reinforced plastic tape; and
an information processing device, wherein
the lamination head attaches a first fiber-reinforced plastic tape during the lamination while the lamination head moves,
an image is photographed by the camera during the attachment of the first fiber-reinforced plastic tape,
the information processing device calculates a gap amount between the first fiber-reinforced plastic tape and a second fiber-reinforced plastic tape on the basis of a first component of translational displacement in an optical axis direction of the camera which is a translational displacement of the lamination head during the attachment of the first fiber-reinforced plastic tape, an in-plane second component of translational displacement which is perpendicular to the optical axis direction of the translational displacement, and the image.

7. The inspection device according to claim 6, wherein
the lamination head is provided with a lamination roller which is in contact with the first fiber-reinforced plastic tape,
the lamination-roller rotation axis of the lamination roller is perpendicular to the optical axis direction,
the information processing device calculates a shooting distance when the image is photographed by the camera on the basis of the first component of translational displacement, the second component of translational displacement, and a distance between a flat plane including the lamination-roller rotation axis and parallel to the optical axis direction, and the camera, and calculates the gap amount on the basis of the shooting distance and the image, and
a direction of the distance is kept parallel to a direction of the second component of translational displacement while the attachment of the first fiber-reinforced plastic tape is in progress.

8. A device for producing composite material components including,
an automatic lamination device which carries out lamination of fiber-reinforced plastic tape; and
an inspection device which determines an attachment state of a first fiber-reinforced plastic tape attached by the automatic lamination device during the lamination, wherein
the automatic lamination device is provided with a lamination head which attaches the first fiber-reinforced plastic tape while the lamination head moves,
the inspection device is provided with a camera mounted on the lamination head and an information processing device,
an image is photographed by the camera while the attachment of the first fiber-reinforced plastic tape is in progress,
the information processing device calculates a gap amount between the first fiber-reinforced plastic tape and a second fiber-reinforced plastic tape on the basis of a first component of translational displacement in an optical axis direction of the camera which is a translational displacement of the lamination head while the attachment of the first fiber-reinforced plastic tape is in progress, an in-plane second component of translational displacement which is perpendicular to the optical axis direction of the translational displacement, and the image,
the information processing device outputs a lamination stopping signal when the gap amount is greater than a predetermined threshold value, and

the automatic lamination device stops the lamination on the basis of the lamination stopping signal.

9. The device for producing composite material components according to claim 8, wherein
the lamination head is provided with a lamination roller which in contact with the first fiber-reinforced plastic tape,
a lamination-roller rotation axis of the lamination roller is perpendicular to the optical axis direction,
the information processing device calculates a shooting distance when the image is photographed by the camera on the basis of the first component of translational displacement, the second component of translational displacement, and a distance between a flat plane including the lamination-roller rotation axis and parallel to the optical axis direction, and the camera, and calculates the gap amount on the basis of the shooting distance and the image, and a direction of the distance is kept parallel to a direction of the second component of translational displacement while the attachment of the first fiber-reinforced plastic tape is in progress.

# FIG. 1

# FIG. 2

# FIG. 3

23

ADVANCEMENT
DIRECTION OF
LAMINATION
HEAD

24

60

25

31

70

26

# FIG. 4

31

32    33

70b

S2

70

26

70a

32    33

31

ADVANCEMENT
DIRECTION OF
LAMINATION
HEAD

FIG. 5

ADVANCEMENT
DIRECTION OF
LAMINATION
HEAD

Z

32

26

60

33

70

# FIG. 6

10

20

21 CONTROLLER

LAMINATION PROGRAM

27

22 DRIVING DEVICE

TAPE SUPPLYING DEVICE — 23 — 24

CUTTER — 25

LAMINATION ROLLER — 26

OPERATING STATE NOTIFYING SIGNAL

INSPECTION RESULT SIGNAL

30

35 INPUT DEVICE

36 OUTPUT DEVICE

37 PROCESSOR

38 STORAGE DEVICE

40 INSPECTION DATA

41 f

42 g

34

31

33 LIGHTING

33 LIGHTING

32 CAMERA

31

33 LIGHTING

33 LIGHTING

32 CAMERA

IMAGE

IMAGE

# FIG. 7

(a)

71    71b    70a    70

60

(b)

52

71b    70a

W

(c)

BRIGHTNESS

P

W

# FIG. 8

(a)

70a

71

70

60

71b

53

(b)

70a

71b

W

(c)

BRIGHTNESS

W

FIG. 9

FIG. 10

40

| COORDINATES OF LAMINATION HEAD | DISTANCE FROM ATTACHMENT STARTING SITE | DETERMINATION RESULTS | GAP AMOUNT |
|---|---|---|---|
| $(X_1, Y_1, Z_1)$ | $D_1$ | GAP | $G_1$ |
| $(X_2, Y_2, Z_2)$ | $D_2$ | GAP | $G_2$ |
| $(X_3, Y_3, Z_3)$ | $D_3$ | LAP | — |
| ⋮ | ⋮ | ⋮ | ⋮ |
| $(X_n, Y_n, Z_n)$ | $D_n$ | GAP | $G_n$ |

FIG. 11

<u>40</u>

| COORDINATES OF LAMINATION HEAD | DISTANCE FROM ATTACHMENT STARTING SITE | DETERMINATION RESULTS | GAP AMOUNT | TRANSLATIONAL DISPLACEMENT OF LAMINATION HEAD | | INCLINATION ANGLE | SHOOTING DISTANCE | GAP AMOUNT AFTER CORRECTION |
|---|---|---|---|---|---|---|---|---|
| $(X_1, Y_1, Z_1)$ | $D_1$ | GAP | $G_1$ | $\triangle T_1$ | $\triangle Z_1$ | $\theta_1$ | $A_1$ | $G_1{}'$ |
| $(X_2, Y_2, Z_2)$ | $D_2$ | GAP | $G_2$ | $\triangle T_2$ | $\triangle Z_2$ | $\theta_2$ | $A_2$ | $G_2{}'$ |
| $(X_3, Y_3, Z_3)$ | $D_3$ | GAP | $G_3$ | $\triangle T_3$ | $\triangle Z_3$ | $\theta_3$ | $A_3$ | $G_3{}'$ |
| $\vdots$ | $\vdots$ | $\vdots$ | $\vdots$ | $\vdots$ | $\vdots$ | $\vdots$ | $\vdots$ | $\vdots$ |
| $(X_n, Y_n, Z_n)$ | $D_n$ | GAP | $G_n$ | — | — | — | — | $G_n{}'$ |

EP 2 502 731 A1

# FIG. 12

# FIG. 13

<div align="center">

**INTERNATIONAL SEARCH REPORT**

</div>

| International application No. |
| --- |
| PCT/JP2010/070457 |

A.  CLASSIFICATION OF SUBJECT MATTER
*B29C70/06*(2006.01)i, *B29C43/46*(2006.01)i, *B29C43/58*(2006.01)i, *B29K105/06*
(2006.01)n, *B29L9/00*(2006.01)n

According to International Patent Classification (IPC) or to both national classification and IPC

B.  FIELDS SEARCHED

Minimum documentation searched (classification system followed by classification symbols)
B29C70/00-70/68, B29C43/00-43/58, B29C65/00-65/82, B32B1/00-43/00,
B29K105/06, B29L9/00

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 06-055656 A  (Toshiba Machine Co., Ltd.), 01 March 1994 (01.03.1994), claims; paragraphs [0011], [0018]; fig. 1, 2 (Family: none) | 1-9 |
| A | JP 07-195527 A  (Nitto Denko Corp.), 01 August 1995 (01.08.1995), claim 1; paragraphs [0022] to [0024]; fig. 1 (Family: none) | 1-9 |
| A | JP 2009-208231 A  (Nitto Denko Corp.), 17 September 2009 (17.09.2009), claims; fig. 1, 2 & US 2009/0218046 A1    & CN 101518949 A & KR 10-2009-0093858 A | 1-9 |

| ☒  Further documents are listed in the continuation of Box C. | ☐  See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 09 February, 2011 (09.02.11) | Date of mailing of the international search report 22 February, 2011 (22.02.11) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/070457 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-152614 A  (Mitsubishi Heavy Industries, Ltd.), 21 June 2007 (21.06.2007), paragraphs [0005] to [0008]; fig. 10 (Family: none) | 1-9 |
| A | JP 2008-539105 A  (The Boeing Co.), 13 November 2008 (13.11.2008), paragraphs [0004], [0029], [0044]; fig. 3 & US 2006/0260751 A1    & US 2009/0205767 A1 & EP 1899147 A          & WO 2006/118692 A1 | 1-9 |
| A | JP 2004-354320 A  (Mitsubishi Electric Engineering Co., Ltd.), 16 December 2004 (16.12.2004), claim 9; fig. 2 (Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009263306 A
- JP 2008030296 A

- JP 2004354320 A